# EUROPEAN PATENT SPECIFICATION

(11) **EP 2 961 703 B1**
(45) Date of publication and mention of the grant of the patent: **05.04.2023**
(21) Application number: 14722712.8
(22) Date of filing: 28.02.2014
(51) Int. Cl.: C03C 3/085, C03C 3/087, C03C 3/095, C03C 4/02, C03C 10/00, F24C 15/10, F24C 15/36

(54) **NON-OPAQUE ARSENIC-FREE BETA-SPODUMENE GLASS CERAMIC EXHIBITING BROWN-GREY COLORATION**
NICHT-OPAKE ARSENFREIE BETA-SPODUMENGLASKERAMIK MIT BRAUN-GRÜNER FÄRBUNG
VITROCÉRAME NON-OPAQUE À BASE DE BÊTA-SPODUMÈNE EXEMPT D'ARSENIC PRÉSENTANT UNE COLORATION GRIS-BRUN

(30) Priority: 28.02.2013 US 201361770499 P
(43) Date of publication of application: 06.01.2016
(73) Proprietor: Eurokera, 77640 Jouarre (FR)
(72) Inventor: COMTE, Marie, Jacqueline, Monique, F-92260 Fontenay aux Roses (FR); LEHUEDE, Philippe, F-77190 Dammarie-les-Lys (FR); JOUSSEAUME, Cecile, Paris 75017 (FR); PLEVACOVA, Kamila, 75017 Paris (FR)
(74) Representative: Elkington and Fife LLP
(86) International application number: PCT/IB2014/000228
(87) International publication number: WO 2014/132122

(56) References cited:
- EP-A1- 1 170 264
- EP-A1- 1 837 313
- WO-A2-2014/035791
- DE-A1-102008 050 263
- DE-A1-102010 032 112
- FR-A1- 2 887 870
- GB-A- 1 246 694
- US-A- 4 211 820
- US-A- 4 461 839
- US-A- 4 526 872
- US-A1- 2007 213 192
- US-A1- 2008 026 927
- US-A1- 2012 035 041

## Description

### BACKGROUND

The present invention relates to glass-ceramics of the lithium aluminosilicate (LAS) type, having a brown-grey color and containing a solid solution of beta-spodumene as the predominant crystalline phase. The invention also relates to methods for obtaining such glass-ceramics and related articles.
Various glass-ceramics are known, for example from GB 1 246 694 A1, US 4,526,872, US 2007/0213192 A1, EP 1 837 313 A1 and US 2012/0035041 A1.

### SUMMARY

One of the desirable properties of glass-ceramic materials is their thermo-mechanical ability to sustain repeated and rapid temperature changes up to very high temperatures, which can be as high as 600-800°C. Although originally developed for other purposes, LAS type glass-ceramics have become the material of choice for certain products in the domestic market, such as glass-ceramic cooktops. The thermo-mechanical properties of LAS type glass ceramics dovetail nicely with the use of this material in cooktop applications.

Many such cooktops employ radiant elements or other heating elements beneath a top surface of the glass-ceramic. Consequently, to be effective, the glass-ceramic material should exhibit the additional properties of: good transmission efficiency in the visible and infrared spectrums, very low coefficient of thermal expansion (CTE), and optionally particular coloration properties in reflection (defined by the parameters L*, a* and b*).

Thus, properties of a viable glass-ceramic material for use in the domestic market, such as for cooktops, involve aesthetic considerations. Although aesthetics are often dismissed as unimportant by some, such considerations are as important as performance characteristics so far as marketability is concerned. For example, in the domestic market, the color of a glass-ceramic material may be the deciding factor as to whether a product is commercially sustainable.

In terms of aesthetic considerations, specifically color, the state of the cooktop art offers three options: transparent black glass-ceramic (with lightness, L*, below 25), white glass-ceramic (with lightness L* higher than 60), and non-colored transparent glass-ceramic with an opaque decorative layer on a backside thereof to provide a desirable color and/or to obscure internal components, such as electrical components, beneath the cooktop. Notably, however, until now there have been no commercial products exhibiting a brown-grey coloration with a range of lightness L* between 25 to 45, good transmission efficiency in the visible and infrared spectrums, and a very low coefficient of thermal expansion (CTE).

It is noted that although cooktops are one use for the one or more glass-ceramic embodiments disclosed herein, the contemplated applications may extend to other areas, including cookware, pots, pans, etc., as well as to packaging for consumer electronics, for example.

Accordingly, there are needs in the art for new methods and apparatus for providing glass-ceramic of desirable aesthetic and performance characteristics.

### BRIEF DESCRIPTION OF THE FIGURES

For the purposes of illustration, there are forms shown in the drawings that are presently preferred, it being understood, however, that the embodiments disclosed and described herein are not limited to the precise arrangements and instrumentalities shown.
FIG. 1 is a table of compositions suitable for use as a glass precursor, and/or a glass-ceramic material Examples 9 and 10 of the table of Fig. 1 do not fall within the scope of claim 1 and are provided for reference purposes only;
FIG. 2 is a table of characteristics of glass-ceramic materials produced using a glass ceramming process of the precursor glass compositions of FIG. 1;
FIG. 3 is a chart illustrating the relationship between lightness L* of the glass ceramic materials produced and the specific maximum ceramming temperature employed in forming same;
FIG. 4 is a chart illustrating the relationship between the blue-yellow hue and the green-red hue in glass ceramic materials as a function of the quantities of iron oxide (Fe2O3) and chromium oxide (Cr2O3);
FIG. 5 is a table of compositions used for purposes of comparison with one or more embodiments herein; and
FIG. 6 is a table of characteristics of glass-ceramic materials produced using the compositions of FIG. 5 after a ceramming process of the precursor glasses.

### DETAILED DESCRIPTION

### General Considerations

While the production of glass ceramics has been carried out for many years, the engineering parameters for producing a brown-grey glass ceramic of specific lightness, L*, transmission, and coefficient of thermal expansion (CTE) have until now been elusive in the art. In this regard, a discussion is provided herein of the requisite processes, compositions, and/or other parameters for producing the aforementioned glass-ceramics.

A glass-ceramic is a polycrystalline material produced via a ceramming process (i.e., a controlled rather than spontaneous crystallization) of a precursor glass. The general process for producing a glass-ceramic material involves three basic steps: (i) forming a precursor glass via appropriate melting (and fining) processes; (ii) cooling and shaping the precursor glass into a desired form; and (iii) ceramming (heat treatment), wherein the precursor glass partly crystallizes and forms a glass-ceramic.

### Glass-Ceramic System

A wide variety of glass-ceramic systems exists, e.g., the Li2O × Al2O3 × nSiO2-System (LAS system), the MgO × Al2O3 × nSiO2-System (MAS system), and the ZnO × Al2O3 × nSiO2-System (ZAS system), to name a few.

The desired system in connection with the embodiments disclosed herein is the Li2O × Al2O3 × nSiO2-System (LAS system). The LAS system mainly refers to a mix of lithium oxide, aluminum oxide, and silicon oxide with additional components, e.g., glass-phase forming agents such as ZrO2, TiO2, MgO, ZnO, BaO, SrO, CaO, K2O, Na2O, P2O5, B2O3, V2O5, Fe2O3, Cr2O3, CoO, NiO, CeO2, and/or SnO2.

In most cases, nucleation agents and fining agents are added to the precursor glass composition. Nucleation agents aid and control the crystallization process and the fining agents are employed to remove gas bubbles from the glass melt. By way of example, one or more embodiments herein may employ ZrO2 and/or TiO2 as nucleation agents in the precursor glass process.

Many conventional precursor glass compositions may employ arsenic oxide (As2O3) and/or antimony oxide (Sb2O3) as fining agents during the step of melting a vitrifiable load of raw materials into a precursor glass. In connection with the protection of the environment, it is desired to avoid the use of As2O3 and Sb2O3, which are highly toxic compounds. Some prior work has been done in connection with producing glass-ceramic without arsenic and/or antimony in the composition, at processing temperatures, times, atmospheres, etc., suitable to achieve desirable transmission, lightness, CTE, etc. However, one skilled in the art will learn from the disclosure herein that one cannot indiscriminately substitute fining agents and expect that the coloration of the resultant glass-ceramic will not be affected. Indeed, significant care must be taken as to process parameters and compositions in order to arrive at a desired brown-grey coloration.

By way of example, one or more embodiments herein may employ tin oxide (SnO₂) as a fining agent in the precursor glass process. Tin oxide is a more powerful reducing agent than alternatives such as arsenic trioxide and antimony trioxide, and therefore its influence on the coloration and optical transmission properties of the glass-ceramic is different from that of the other compounds. Indeed, although SnO2 may have an initial function as a fining agent, the presence of the compound may indirectly affect coloring and light transmission of the glass-ceramic by reducing colorants such as vanadium oxide (V₂O₅) and iron oxide (Fe₂O₃) present during ceramming. The effects of V₂O₅ and Fe₂O₃ on coloration will be discussed in more detail later herein.

After crystallization, the dominant crystal-phase in LAS type glass-ceramic is a high-quartz solid solution, and when the glass-ceramic is subjected to a more intense heat treatment, the high-quartz solid solution transforms into a keatite-solid solution (which is sometimes called beta-spodumene). This transition is non-reversible and reconstructive, which means that bonds in the crystal-lattice are broken and new bonds are arranged.

In an LAS type glass-ceramic, it is possible to adjust the CTE over a wide range by adjusting the initial glass composition, the nature and amount of the crystalline phases and the amount and composition of the residual glass. For purposes of one or more embodiments herein, a low or even zero CTE is desired, which may be obtained by controlling the ceramming heat treatment process to balance the negative and positive CTE contributions of the dominant crystalline phase of the LAS glass-ceramic and residual glass phase(s). Once again, however, one cannot indiscriminately adjust the ceramming temperatures to account for desired CTE without considering the effect that such may have on the coloration of the resultant glass-ceramic. Indeed, it has been discovered that the ceramming temperatures have a significant effect on the lightness, L*, and the color of the resultant glass-ceramic.

In view of the foregoing, various embodiments have been discovered that provide for glass-ceramics, free of arsenic and/or of antimony, having very desirable integrated visible transmission, optical transmission, infra-red transmission, coefficient of thermal expansion, lightness, and coloration.

### EXPERIMENTS

In connection with the development of the embodiments herein, a number of experiments were conducted on numerous samples of material. In particular, a number of glass samples of varying composition were subject to ceramming at different temperatures in order to evaluate the aforementioned characteristics.

### Glass Compositions

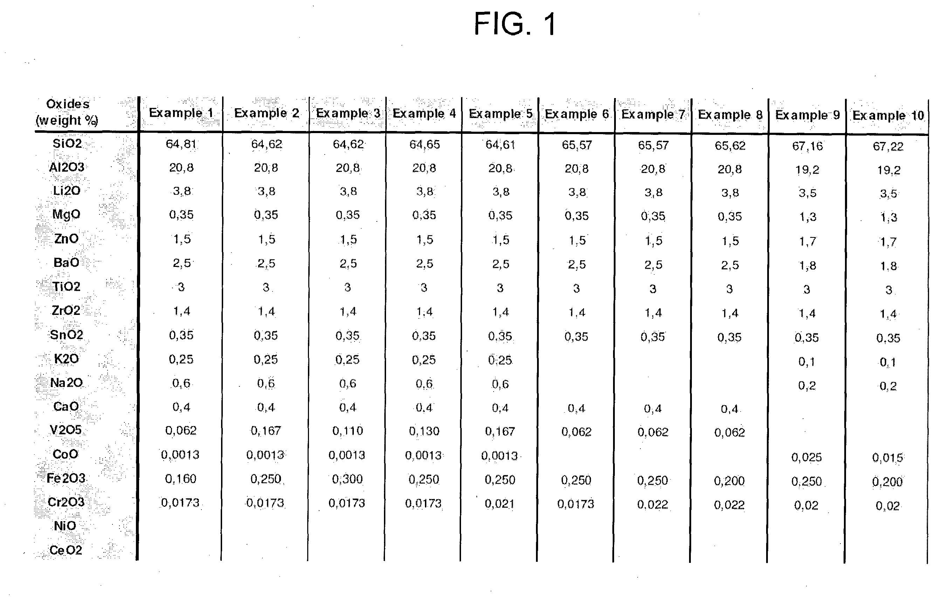

The specific glass compositions utilized to produce the precursor glasses, and/or glass-ceramic materials of the examples herein are listed in the table shown in FIG. 1. The compositions all belong to the LAS system whereby examples 1 to 8 fall within the following preferred composition ranges (in weight %): 60-72% SiO₂, 18-23% Al₂O₃, 2.5-4.5% Li₂O, 0-2.5% ZrO₂, 1.5-4% TiO₂, 0-3% MgO, 0-3% ZnO, 0-5% BaO, 0-5% SrO (with 0 ≤ BaO+SrO ≤ 5), 0-2% CaO, 0-1.5% K₂O, 0-1.5% Na₂O (optionally with 0 ≤ CaO+K₂O+Na₂O ≤ 1.5 or 1.25 or 1.0), 0-5% P₂O₅, 0-2% B₂O₃, 0.005-0.2% V₂O₅, 0.12-0.4% Fe₂O₃, 0.01-0.04% Cr₂O₃, 0-0.05% CoO, 0-0.3% NiO, 0-0.2% CeO₂, and/or 0-0.6% SnO₂. Examples 9 and 10 do not fall within the scope of claim 1 and are provided for reference purposes only.

The ZrO₂ and TiO₂ components are used for nucleation, and the SnO₂ is used as a fining component.

The V₂O₅, Fe₂O₃, Cr₂O₃, CoO, NiO, and/or CeO₂ are used for coloring. Fe₂O₃ and Cr₂O₃ were specifically chosen to develop a brown-grey coloration after ceramming.

Notably, the compositions of FIG. 1 contain SnO₂ as a fining agent. The amount of SnO₂ present may be significant in order to achieve the desired fining functionality; however, any devitrification should be minimized or even avoided and the influence of the SnO2 on the integrated optical transmission should be controlled. Indeed, SnO₂ is capable of reducing the vanadium oxide and the iron oxide present during ceramming, although due to the high raw material cost for SnO₂, its use is advantageously minimized. The glass ceramics of the invention comprise a SnO₂ content of up to 0.6%, e.g., from 0.1% to 0.4% by weight may be used. Preferably, the embodiments herein contain one of: (i) from 0.1% to 0.3% by weight of SnO₂; (ii) from 0.2% to 0.3% by weight of SnO₂; and (iii) 0.2% to 0.4% by weight.

Accordingly, the disclosed glass-ceramics contain neither As₂O₃ nor Sb₂O₃ in any significant amount (i.e., they may contain only traces of one and/or the other of these toxic compounds). If traces of one or the other are present, then such may likely be quantified as As₂O₃ + Sb₂O₃ is less than 1000 ppm, preferably less than 500 ppm.

### Processing Conditions

Each of the samples was subject to the following basic process. First the raw materials were melted by preheating in a furnace at 1550°C, followed by heating for 30 minutes at 1550°C, heating for 60 minutes from 1550°C to 1650°C, and heating for 360 minutes at 1650°C. Next, the glass was rolled to a thickness of between 4-6 mm, and then annealed at 650°C for 1 hour.

Finally, the samples were cerammed in a static furnace in accordance with the following cycle: (i) rapid heating from room temperature to 655°C for 20 to 40 minutes; (ii) nucleation from 650°C to 820°C for 15 to 30 minutes; (iii) heating from 820°C to the maximum ceramming temperature for 10 to 20 minutes (notably, the maximum ceramming temperature can vary from 950°C to 1060°C); (iv) crystallization at the maximum ceramming temperature for 5 to 15 minutes; and (v) rapid cooling from 20 to 40 minutes to room temperature.

By way of further specifics, the thermal cycle may be: (i) rapid heating from room temperature to 655°C for 25 minutes; (ii) heating from 650°C to 820°C for 24 minutes; (iii) heating from 820°C to the maximum ceramming temperature for 12 to 15 minutes; (iv) crystallization at the maximum ceramming temperature for 8 minutes; (v) rapid cooling down to 900°C for 5 minutes; and (vi) rapid cooling (from 20 to 40) minutes to room temperature.

### Experimental Results

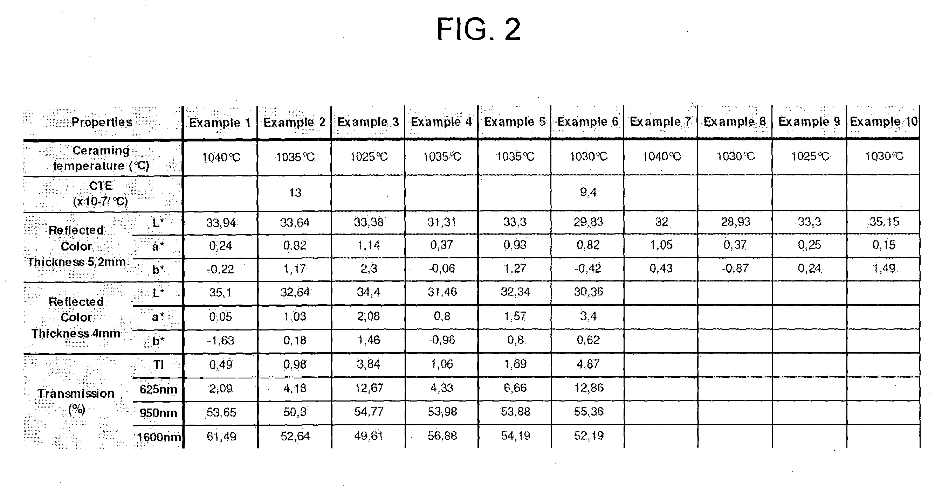

FIG. 2 is a table showing certain characteristics of each glass-ceramic sample as well as the associated maximum ceramming temperature. Notably, the maximum ceramming temperature varied between 1025-1040°C. Given the glass composition system discussed above, and given that the ceramming treatment used thermal cycles higher than 950°C, the resulting material of all the samples presented a crystallographic structure that was mainly composed of beta-spodumene glass-ceramic.

### Coefficient of Thermal Expansion

As noted above, one of the desired characteristics of the glass-ceramic is a coefficient of thermal expansion (CTE) of lower than 15×10-7/°C (measured between 20°C to 700°C). As shown in FIG. 2, the achieved CTE was indeed less than 15x10-7/°C. Such a CTE, however, is higher than for beta-quartz glass ceramic material (which is generally obtained using lower ceramming temperatures). In general, beta-quartz glass ceramic material exhibits a CTE close to zero. It has been discovered that in order to obtain a CTE of less than 15x10-7/°C, or less than 11x10-7/°C, in a beta-spodumene glass-ceramic, it is preferable to limit the content of the Na₂O, K₂O and/or CaO as evidenced by comparing Examples 2 and 6.

### Lightness L*

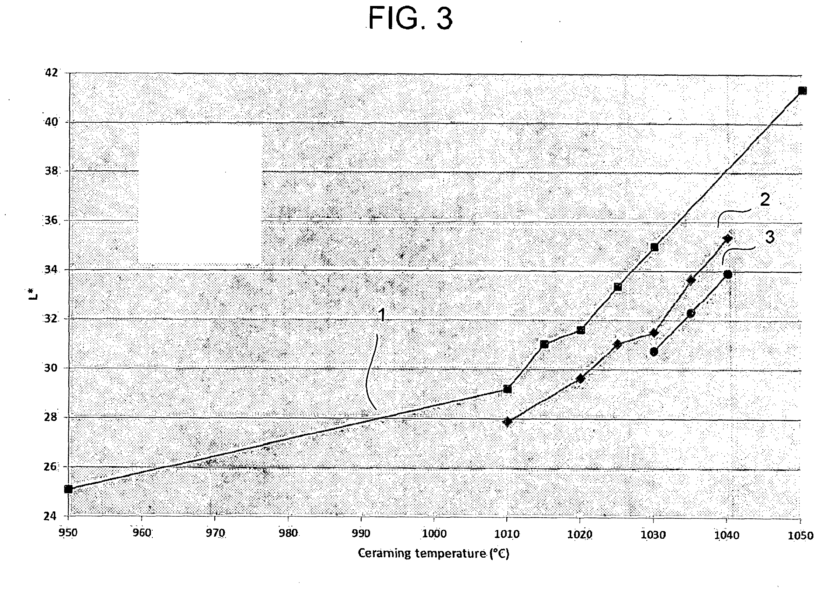

Additionally and/or alternatively, another of the desired characteristics of the glass-ceramic is a lightness L* between 20-40. By way of example, the lightness L* may be measured in reflection using a white background with illuminant D65 at 10° observer conditions. As illustrated in FIG. 3, it has been discovered that the glass-ceramic materials formed from the glass compositions of FIG. 1 will exhibit a lightness L* that varies as a function of ceramming temperature. Indeed, as shown in FIG. 3, Example 1 (labeled "1") shows that if the ceramming temperature is varied between 950°C to 1060°C, the lightness L* values will vary from 20 to 45. The relationship between lightness L* and ceramming temperature is also exhibited in Examples 2 and 3 in FIG. 3. The increasing value of the lightness L* is caused by a resultant increase of the diffusion back-scattering of the light by the material arising from the increase of the ceramming temperature. Thus, using a ceramming temperature of less than 950°C produces a glass-ceramic material with a lightness L* of less than 20 and using a ceramming temperature of greater than 1060°C produces a glass-ceramic that is too opaque, having a lightness of greater than 45.

### Light Transmission Characteristics

Additionally and/or alternatively, other characteristics of the glass-ceramics are related to certain light transmission characteristics, which may be quantified, for example, using the known illuminant D65, 2° observer test on, for example, 4-5.5 mm thick samples. Such transmission characteristics include integrated visible transmission (Tl), which may be measured between 380-780 nm; optical transmission measured at 625 nm; optical transmission measured at 950 nm; and/or infra-red optical transmission, which may be measured at 1600 nm.

By way of example, the integrated visible transmission (Tl) may be one of: (i) between 0.3% to 6%; (ii) between 0.4% to 5%; (iii) between 0.5% to 5%; (iv) between 0.6% to 4%; (v) between 0.7% to 3%; and (vi) between 0.8% to 2%. Notably, the range of 0.8% to 2% is preferred when, for example, one wishes to permit an observer to see with some level of clarity, for example, heating elements glowing below a radiant cooktop without being distracted or overwhelmed by them. Indeed, in some embodiments it may be desirable to permit some level of light transmission for seeing through the glass-ceramic, but not too much light transmission, e.g., providing limited clarity of vision at items behind the glass-ceramic.

It has been discovered that V₂O₅, Fe₂O₃, CoO, Cr₂O₃, NiO and CeO₂ may be used to tune the characteristic of the integrated visible transmission (Tl) of the glass-ceramic material. It is desirable to employ at least one of these oxides to reach the desired value of the integrated visible transmission. Notably, the Fe₂O₃ content and the V₂O₅ content (although both are primarily employed for coloration) have a relationship to one another as concerns the integrated visible transmission (Tl). Indeed, it has been found that the amount of Fe₂O₃ should be increased in the composition as the V₂O₅ increases in order to obtain a material with an integrated visible transmission of greater than 0.5%.

The optical transmission (measured at 625 nm) is higher than 2%; and may be higher than 3.5%. For example, an optical transmission (at 625 nm) of greater than 2%, and preferably greater than 3.5%, is desirable for radiant cook-top applications. Additionally, such characteristic would permit one to see through the ceramic material in applications where there were red LEDs behind the material.

In some embodiments, such as when certain types of electronic controls are employed in a product (e.g., IR touch controls), it may be desirable to control the optical transmission (measured at 950 nm). For example, the optical transmission (measured at 950 nm) may be one of: (i) between 35-75%; (ii) between 50-70%; and (iii) between 45-55%. In addition to providing good performance for cooktop applications in general, the preferred range of between 50% - 70% would permit the use of infrared (IR) touch controls on a product, such as on a cooktop appliance.

Additionally and/or alternatively, the infra-red optical transmission (e.g., measured at 1600 nm) may be one of: (i) between 45-80%; (ii) between 50-75%; and (iii) between 45-60%. A preferred range of between 50%-75% provides good heating performance in a cooktop application. In a cooktop application, it has been found that an infra-red optical transmission of less than 50% begins to show signs of reduced ability to heat an item placed thereon, and an infra-red optical transmission of more than 75% can begin to show signs of excessive heating of materials located in proximity of, but outside, a desired heating zone.

### Color Characteristics

As discussed above, an important aspect of the embodiments herein are their color characteristics. Indeed, for commercial purposes it is desirable to achieve a glass-ceramic having the aforementioned functional properties as well as certain coloration, specifically in the grey family, such as brown-grey.

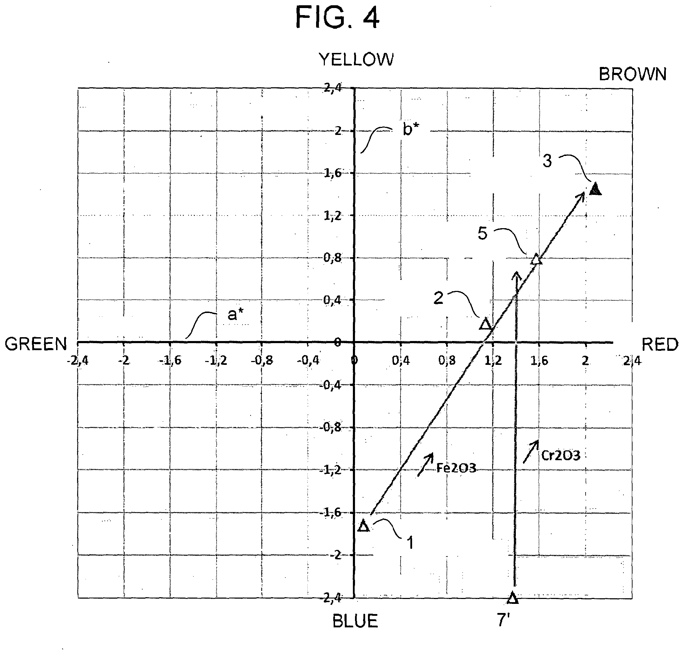

In this regard, reference is now made to FIG. 4, which is a graph on a Cartesian coordinate system illustrating the effect of certain coloring agents within the glass compositions of the embodiments herein. The y-axis (ordinate) represents the hue (b*), blue-yellow component of color, while the x-axis (abscissa) represents the hue (a*), green-red component of color. The color values on the graph may be quantified, for example, using the known illuminant D65, 10° observer test, which was used to measure color of the 4 mm thick and 5.2 mm thick samples herein. The a* and b* coordinates are typically measured simultaneously with the L* value.

The primary contributors to variations in the color of the resultant glass-ceramic are vanadium oxide (V₂O₅), chromium oxide (Cr₂O₃), and iron oxide (Fe₂O₃) . This combination of coloring agents permits relatively high quantities of Cr₂O₃ and Fe₂O₃ without incurring significant cost insofar as iron and chromium are readily available at low cost.

V₂O₅, in the presence of SnO₂, significantly darkens the glass during ceramming, as V₂O₅ is responsible for absorption of light having wavelengths mainly below 700 nm. Yet, even in the presence of V₂O₅ and SnO₂ it is possible to retain sufficiently high optical transmission at 650nm, 950 nm and in the infra-red optical transmission frequencies (e.g., 1600 nm). The amount of V₂O₅ present is 0.005 to 0.2%; preferably 0.05% to 0.1%.

Chromium oxide (Cr₂O₃) has been found to be suitable for providing a darkening function of wavelengths within the visible range (e.g., between 400-600 nm) while retaining high transmission in the wavelengths between 600 and 800 nm. The amount of Cr₂O₃ present is 0.01% to 0.04%; preferably 0.016% to 0.02%; and more preferably 0.016% to 0.018%. Due to the presence of Cr₂O₃ in the composition, the glass-ceramic shows low transmission in the blue range.

Iron oxide (Fe₂O₃) leads to absorption mainly in the infra-red wavelengths; however, iron oxide is also involved in the visible wavelengths and affects the coloration of the glass-ceramic. The amount of Fe₂O₃ present is 0.12% to 0.4%; preferably 0.15% to 0.35%; and more preferably 0.16% to 0.25%. Notably, the effect of Fe₂O₃ within the listed compositions may be adjusted by varying the vanadium oxide content. For example, at Fe₂O₃ content greater than 0.15%, transmission in the visible range is slightly increased (probably because SnO₂ preferentially reduces Fe₂O₃ and, as a consequence, the amount of reduced vanadium is lower). Such lightening of the glass-ceramic may then be compensated by a greater V₂O₅ content (however remaining within the range indicated above).

With reference still to FIG. 4, as the content of Cr₂O₃ is increased, the hue (b*) moves from negative levels (blue) to positive levels (yellow). Comparative Example 7 (labeled "7'") is depicted for illustration. As the content of Fe₂O₃ is increased, the hue (a*) moves from low positive levels (green) to higher positive levels (red), and the hue (b*) moves from negative levels (blue) to positive levels (yellow). A number of samples are shown on the illustrated plot. A first sample (labeled "1" and corresponding to Example 1 of FIG. 1) was of a base composition within the ranges discussed above, including 0.0173% Cr₂O₃ and 0.16% Fe₂O₃. Such a composition is clearly on the blue side of the coloration scale illustrated. A second sample (labeled "2" and corresponding to Example 2 of FIG. 1) was also of a base composition within the above ranges, including 0.0173% Cr₂O₃ and 0.25% Fe₂O₃. The composition exhibited movement in both the yellow and red directions (i.e., towards brown) of the coloration scale illustrated. A third sample (labeled "5" and corresponding to Example 5 of FIG. 1) was also of a base composition within the above ranges, including 0.021% Cr₂O₃ and 0.25% Fe₂O₃. The composition exhibited further movement in both the yellow and red directions of the coloration scale illustrated. A fourth sample (labeled "3" and corresponding to Example 3 of FIG. 1) was also of a base composition within the above ranges, including 0.0173% Cr₂O₃ and 0.3% Fe₂O₃. The composition exhibited a coloration even closer to a red-brown.

Taking the above into consideration, along with one or more other characteristics discussed above, in accordance with one or more desired embodiments, the hue (a*) may be one of: (i) 0 to +4; (ii) +0 to +3; and (iii) +0 to +2. Additionally and/or alternatively, the hue (b*) may be one of: (i) between -2 to +4; (ii) -1 to +3; and (iii) 0 to +2.

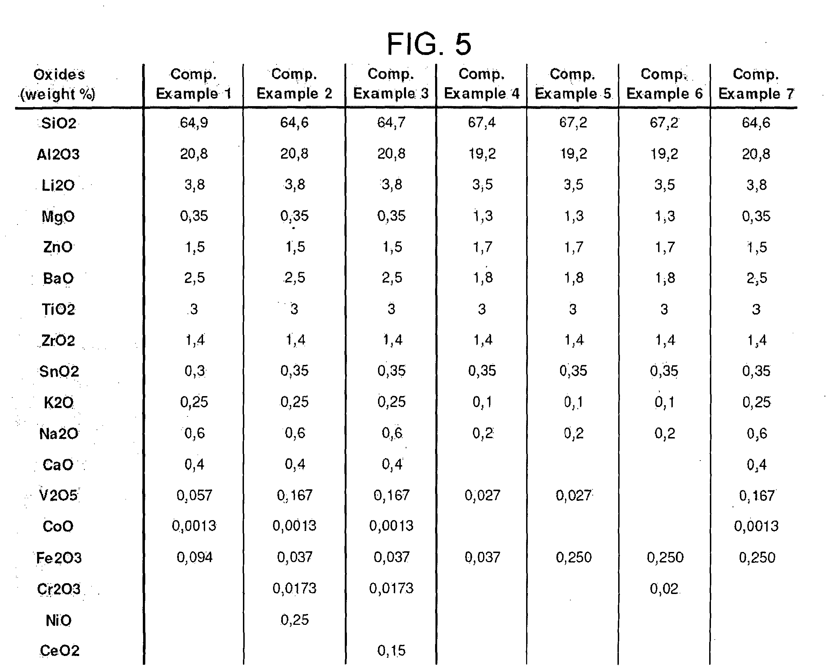

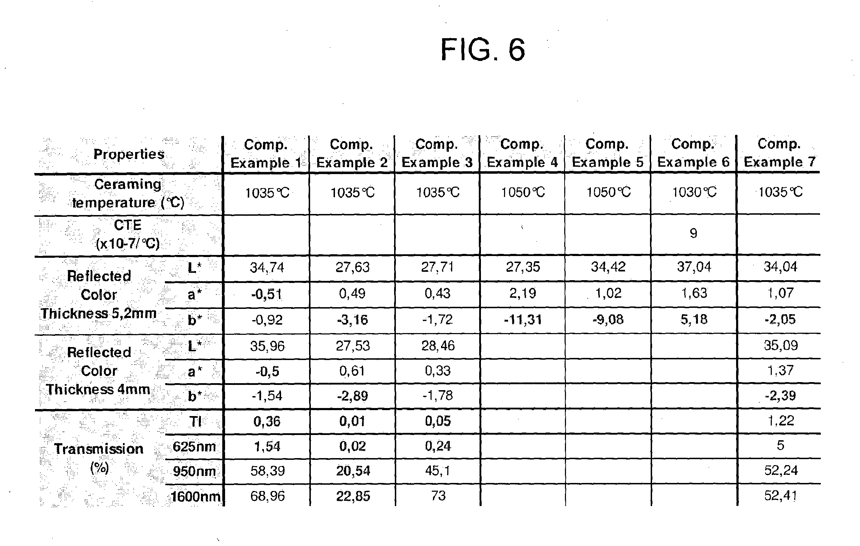

With reference to FIG. 5 a number of samples were prepared having differing compositions as compared with the samples of FIG. 1. FIG. 6 is a table of characteristics of the glass-ceramic materials produced using the compositions of FIG. 5 after a glass ceramming process. It was found that the compositions of comparative examples 1, 2, 3, and 4 were undesirable because the level of Fe₂O₃ was too low and yielded unacceptable values of the integrated optical transmission (Tl). It was found that the composition of comparative example 5 was undesirable because it did not contain any Cr₂O₃ and therefore did not yield satisfactory coloration. A similar issue existed for comparative example 7 as it also did not contain any Cr₂O₃. With reference to FIG. 4, the data point for comparative example 7 is shown (see label number 7'), which exhibits a hue (b*) significantly toward blue. When a small amount of CrO₂ is added (see Example 5 or Example 2 of FIG. 1), the color shifted toward positive values of hue (b*) as shown in FIG. 4 by label number 2 or label number 5. Comparative example 6 is undesirable because it does not include at least one of the oxides (V2O5, CoO, NiO and CeO2) and therefore does not exhibit satisfactory integrated optical transmission (Tl).

Within the scope of the disclosed embodiments, it is contemplated that the composition of the glass-ceramic contains, in addition to Fe₂O₃, V₂O₅ and Cr₂O₃, at least one further coloring agent. However, it is important to keep in mind that the presence of one or more further coloring agents may have an influence on the targeted optical transmission characteristics discussed above. Therefore, attention should be paid to possible interactions, even with relatively low levels of such further coloring agents. For example, CoO may only be tolerable in very small amounts because CoO strongly absorbs light in the infra-red wavelengths and in a non-negligible way at wavelengths of 625 nm.

### Variations and Embodiments

Although the above discussion has been presented primary in terms of obtaining a glass-ceramic for a cooktop, skilled artisans will appreciate that the embodiments herein may be applied to many other products.

Although the above discussion has been primarily directed to glass compositions, and glass-ceramic properties, skilled artisans will appreciate that the discussion has been provided in significant detail to enable any number of methods and processes to fabricate such glass and glass-ceramic materials and resultant products. In essence, the base process steps may include the heat treatment of a vitrifiable load of raw materials under conditions which successively ensure melting, fining and then ceramming. The load is a precursor of a glass for producing the glass-ceramic materials discussed above, advantageously having the base composition specified above.

## Claims

1. A glass-ceramic comprising in weight%:
60-72% SiO₂,
18-23% Al₂O₃,
2.5-4.5% Li₂O,
0-2.5% ZrO₂,
1.5-4% TiO₂,
0-3% MgO,
0-3% ZnO,
0-5% BaO,
0-5% SrO,
wherein 0 ≤ BaO+SrO ≤ 5
0-2% CaO,
0-1.5% K₂O,
0-1.5% Na₂O,
0-5% P₂O₅,
0-2% B₂O₃,
0.005-0.2% V₂O₅,
0.12-0.4% Fe₂O₃,
0.01-0.04% Cr₂O₃,
0-0.05% CoO,
0-0.3% NiO,
0-0.2% CeO₂, and
0-0.6% SnO₂, and containing beta-spodumene as a predominant crystalline phase, wherein the glass ceramic exhibits a brown-grey color.

2. The glass-ceramic of claim 1, wherein a lightness L* thereof is between 20 - 40, measured in reflection using an illuminant D65, 10° observer test.

3. The glass-ceramic according to claims 1 or 2, wherein at least one of:
a green-red hue (a*)of the glass-ceramic is one of: (i) between 0 to +4; (ii) +0 to +3; and (iii) +0 to +2,
a blue-yellow hue (b*) of the glass-ceramic is one of: (i) between -2 to +4; (ii) -1 to +3; and (iii) 0 to +2, and
said hue is measured using an illuminant D65, 10° observer test.

4. The glass-ceramic as in any one of the preceding claims, wherein a coefficient of thermal expansion is one of: (i) less than 15x10-7 /°C; (ii) less than 13x10-7 /°C; and (iii) less than 11x10-7 /°C.

5. The glass-ceramic as in any one of the preceding claims, wherein a integrated visible transmission (Tl) is one of: (i) between 0.3% to 6%; (ii) between 0.4% to 5%; (iii) between 0.5% to 5%; (iv) between 0.6% to 4%; (v) between 0.7% to 3%; and (vi) between 0.8% to 2%, and wherein said integrated visible transmission (Tl) is measured using an illuminant D65, 2° observer test on 4 mm thick glass-ceramic.

6. The glass-ceramic as in any one of the preceding claims, wherein the optical transmission, measured at 625 nm, is higher than 3.5%,wherein said optical transmission is measured using an illuminant D65, 2° observer test on 4 mm thick glass ceramic.

7. The glass-ceramic as in any one of the preceding claims, wherein an optical transmission, measured at 950 nm, is one of: (i) between 35-75%; (ii) between 50-70%; and (iii) between 45-55%, and wherein said optical transmission is measured using an illuminant D65, 2° observer test on 4 mm thick glass-ceramic.

8. The glass-ceramic as in any one of the preceding claims, wherein an infra-red optical transmission, measured at 1600 nm, is one of: (i) between 45-80%; (ii) between 50-75%; and (iii) between 45-60%, and wherein said optical transmission is measured using an illuminant D65, 2° observer test on 4 mm thick glass-ceramic.

9. The glass-ceramic as in any one of the preceding claims, wherein the glass ceramic is substantially fee of As₂O₃ and Sb₂O₃.

10. A method of making a glass ceramic as in any one of the preceding claims, comprising:
melting a load of vitrifiable raw materials;
fining the load to obtained molten glass;
cooling the molten glass to a temperature sufficient to shape it into a desired shape; and
ceramming of the shaped glass at a maximum temperature between 960°C to 1060°C, to produce a lithium aluminosilicate type glass-ceramic material containing beta-spodumene as a predominant crystalline phase,
wherein the glass-ceramic exhibits a brown-grey color.

11. The method of claim 10, wherein at least one of:
a green-red hue (a*) of the glass-ceramic is one of: (i) between 0 to +4; (ii) +0 to +3; and (iii) +0 to +2,
a blue-yellow hue (b*) of the glass-ceramic is one of: (i) between -2 to +4; (ii) -1 to +3; and (iii) 0 to +2, and
said hue is measured in reflection using an illuminant D65, 10° observer test.

## Patentansprüche

1. Glaskeramik, umfassend in Gew.%:
60-72 % SiO₂,
18-23 % Al₂O₃,
2,5-4,5 % Li₂O,
0-2,5 % ZrO₂,
1,5-4 % TiO₂,
0-3 % MgO,
0-3 % ZnO,
0-5 % BaO,
0-5 % SrO,
wobei 0 ≤ BaO+SrO ≤ 5
0-2 % CaO,
0-1,5 %K₂O,
0-1,5 % Na₂O,
0-5 % P₂O₅,
0-2 % B₂O₃,
0,005-0,2 % V₂O₅,
0,12-0,4 % Fe₂O₃,
0,01-0,04 % Cr₂O₃,
0-0,05 % CoO,
0-0,3 % NiO,
0-0,2 % CeO₂, und
0-0,6 % SnO₂, und enthaltend Beta-Spodumen als vorherrschende kristalline Phase, wobei die Glaskeramik eine braun-graue Farbe aufzeigt.

2. Glaskeramik nach Anspruch 1, wobei eine Helligkeit L* davon zwischen 20 - 40 ist, gemessen in Reflexion unter Verwendung eines Beobachtertests mit Leuchtmittel D65, 10 °.

3. Glaskeramik nach Anspruch 1 oder 2, wobei zumindest eines des Folgenden gilt:
ein grün-roter Farbton (a*) der Glaskeramik ist eines von: (i) zwischen 0 bis +4; (ii) +0 bis +3; und (iii) +0 bis +2,
ein blau-gelber Farbton (b*) der Glaskeramik ist eines von: (i) zwischen -2 bis +4; (ii) -1 bis +3; und (iii) 0 bis +2, und
der Farbton wird unter Verwendung eines Beobachtertests mit Leuchtmittel D65, 10 ° gemessen.

4. Glaskeramik nach einem der vorhergehenden Ansprüche, wobei ein Wärmeausdehnungskoeffizient eines des Folgenden ist: (i) weniger als 15x10-7 /°C; (ii) weniger als 13x10-7 /°C; und (iii) weniger als 11x10-7 /°C.

5. Glaskeramik nach einem der vorhergehenden Ansprüche, wobei eine integrierte sichtbare Übertragung (T1) eines des Folgenden ist: (i) zwischen 0,3 % bis 6 %; (ii) zwischen 0,4 % bis 5 %; (iii) zwischen 0,5 % bis 5 %; (iv) zwischen 0,6 % bis 4 %; (v) zwischen 0,7 % bis 3 %; und (vi) zwischen 0,8 % bis 2 %, und wobei die integrierte sichtbare Übertragung (T1) unter Verwendung eines Beobachtertests mit Leuchtmittel D65, 2 ° auf 4 mm dicker Glaskeramik gemessen wird.

6. Glaskeramik nach einem der vorhergehenden Ansprüche, wobei die optische Übertragung, gemessen bei 625 nm, höher als 3,5 % ist, wobei die optische Übertragung unter Verwendung eines Beobachtertests mit Leuchtmittel D65, 2 ° auf 4 mm dicker Glaskeramik gemessen wird.

7. Glaskeramik nach einem der vorhergehenden Ansprüche, wobei eine optische Übertragung, gemessen bei 950 nm, eines des Folgenden ist: (i) zwischen 35-75 %; (ii) zwischen 50-70 %; und (iii) zwischen 45-55 %, und wobei die optische Übertragung unter Verwendung eines Beobachtertests mit Leuchtmittel D65, 2 ° auf 4 mm dicker Glaskeramik gemessen wird.

8. Glaskeramik nach einem der vorhergehenden Ansprüche, wobei eine optische Infrarotübertragung, gemessen bei 1600 nm, eines des Folgenden ist: (i) zwischen 45-80 %; (ii) zwischen 50-75 %; und (iii) zwischen 45-60 %, und wobei die optische Übertragung unter Verwendung eines Beobachtertests mit Leuchtmittel D65, 2 ° auf 4 mm dicker Glaskeramik gemessen wird.

9. Glaskeramik nach einem der vorhergehenden Ansprüche, wobei die Glaskeramik im Wesentlichen frei von AS₂O₃ und Sb₂O₃ ist.

10. Verfahren zum Herstellen einer Glaskeramik nach einem der vorhergehenden Ansprüche, umfassend:
Schmelzen einer Ladung aus verglasbaren Rohmaterialien;
Läutern der Ladung, um geschmolzenes Glas zu erhalten;
Abkühlen des geschmolzenen Glases auf eine Temperatur, die ausreicht, um es in eine gewünschte Form zu bringen; und
Keramisieren des geformten Glases bei einer maximalen Temperatur zwischen 960 °C und 1060 °C, um ein glaskeramisches Material vom Lithium-Aluminosilikat-Typ herzustellen, das Beta-Spodumen als vorherrschende kristalline Phase enthält,
wobei die Glaskeramik eine braun-graue Farbe aufzeigt.

11. Verfahren nach Anspruch 10, wobei zumindest eines des Folgenden gilt:
ein grün-roter Farbton (a*) der Glaskeramik ist eines von: (i) zwischen 0 bis +4; (ii) +0 bis +3; und (iii) +0 bis +2,
ein blau-gelber Farbton (b*) der Glaskeramik ist eines von Folgendem: (i) zwischen -2 bis +4; (ii) -1 bis +3; und (iii) 0 bis +2, und
der Farbton wird in Reflexion unter Verwendung eines Beobachtertests mit Leuchtmittel D65, 10 ° gemessen.

## Revendications

1. Vitrocéramique comprenant en % en poids :
60 à 72 % de SiO₂,
18 à 23 % d'Al₂O₃,
2,5 à 4,5 % de Li₂O,
0 à 2,5 % de ZrO₂,
1,5 à 4 % de TiO₂,
0 à 3 % de MgO,
0 à 3 % de ZnO,
0 à 5 % de BaO,
0 à 5 % de SrO,
dans laquelle 0 ≤ BaO+SrO ≤ 5
0 à 2 % de CaO,
0 à 1,5 % de K₂O,
0 à 1,5 % de Na₂O,
0 à 5 % de P₂O₅,
0 à 2 % de B₂O₃,
0,005 à 0,2 % de V₂O₅,
0,12 à 0,4 % de Fe₂O₃,
0,01 à 0,04 % de Cr₂O₃,
0 à 0,05 % de CoO,
0 à 0,3 % de NiO,
0 à 0,2 % de CeO₂, et
0 à 0,6 % de SnO₂, et contenant du bêta-spodumène en tant que phase cristalline prédominante, ladite vitrocéramique présentant une couleur gris-brun.

2. Vitrocéramique selon la revendication 1, la luminosité L* de celle-ci étant comprise entre 20 à 40, mesurée en réflexion au moyen d'un test avec un illuminant D65 et un observateur à 10°.

3. Vitrocéramique selon la revendication 1 ou 2, au moins une teinte parmi :
une teinte rouge-vert (a*) de la vitrocéramique étant une teinte parmi : (i) entre 0 à +4 ; (ii) +0 à +3 ; et (iii) +0 à +2,
une teinte jaune-bleu (b*) de la vitrocéramique étant une teinte parmi : (i) entre -2 à +4 ; (ii) -1 à +3 ; et (iii) 0 à +2, et
ladite teinte étant mesurée au moyen d'un test avec un illuminant D65 et un observateur à 10°.

4. Vitrocéramique selon l'une quelconque des revendications précédentes, le coefficient de dilatation thermique étant un coefficient parmi : (i) moins de 15x10-7 /°C ; (ii) moins de 13x10-7 /°C ; et (iii) moins de 11x10-7 /°C.

5. Vitrocéramique selon l'une quelconque des revendications précédentes, la transmission visible intégrée (T1) étant une transmission parmi : (i) entre 0,3 % à 6 % ; (ii) entre 0,4 % à 5 % ; (iii) entre 0,5 % à 5 % ; (iv) entre 0,6 % à 4 % ; (v) entre 0,7 % à 3 % ; et (vi) entre 0,8 % à 2 %, et ladite transmission visible intégrée (T1) étant mesurée au moyen d'un test avec un illuminant D65 et un observateur à 2° sur une vitrocéramique de 4 mm d'épaisseur.

6. Vitrocéramique selon l'une quelconque des revendications précédentes, la transmission optique, mesurée à 625 nm, étant supérieure à 3,5 %, ladite transmission optique étant mesurée au moyen d'un test avec un illuminant D65 et un observateur à 2° sur une vitrocéramique de 4 mm d'épaisseur.

7. Vitrocéramique selon l'une quelconque des revendications précédentes, la transmission optique, mesurée à 950 nm, étant une transmission parmi : (i) entre 35 à 75 % ; (ii) entre 50 à 70 % ; et (iii) entre 45 à 55 %, et ladite transmission optique étant mesurée au moyen d'un test avec un illuminant D65 et un observateur à 2° sur une vitrocéramique de 4 mm d'épaisseur.

8. Vitrocéramique selon l'une quelconque des revendications précédentes, la transmission optique infrarouge, mesurée à 1600 nm, étant une transmission parmi : (i) entre 45 à 80 % ; (ii) entre 50 à 75 % ; et (iii) entre 45 à 60 %, et ladite transmission optique étant mesurée au moyen d'un test avec un illuminant D65 et un observateur à 2° sur une vitrocéramique de 4 mm d'épaisseur.

9. Vitrocéramique selon l'une quelconque des revendications précédentes, ladite vitrocéramique étant sensiblement exempte de As₂O₃ et de Sb₂O₃.

10. Procédé de fabrication d'une vitrocéramique selon l'une quelconque des revendications précédentes, comprenant :
la fusion d'une charge de matières premières vitrifiables ;
l'affinage de la charge jusqu'à obtention d'un verre en fusion ;
le refroidissement du verre en fusion jusqu'à une température suffisante pour le mettre en forme en une forme souhaitée ; et
la céramisation de la forme souhaitée à une température maximale comprise entre 960°C à 1060°C, pour produire un matériau vitrocéramique de type aluminosilicate de lithium contenant du bêta-spodumène en tant que phase cristalline prédominante,
ladite vitrocéramique présentant une couleur gris-brun.

11. Procédé selon la revendication 10, au moins une teinte parmi :
une teinte rouge-vert (a*) de la vitrocéramique étant une teinte parmi : (i) entre 0 à +4 ; (ii) +0 à +3 ; et (iii) +0 à +2,
une teinte jaune-bleu (b*) de la vitrocéramique étant une teinte parmi : (i) entre -2 à +4 ; (ii) -1 à +3 ; et (iii) 0 à +2, et
ladite teinte étant mesurée en réflexion au moyen d'un test avec un illuminant D65 et un observateur à 10°.
